# DEMANDE DE BREVET EUROPEEN

(11) **EP 2 369 519 A1**
(43) Date de publication de la demande: **28.09.2011**
(21) Numéro de dépôt: 10305178.5
(22) Date de dépôt: 23.02.2010
(51) Int. Cl.: G06F 21/00, G06K 7/10

(54) **Procédé et dispositif de transmission de données**

(71) Demandeur: Gemalto SA, 92190 Meudon (FR)
(72) Inventeur: Karlisch, Thierry, 13600 La Ciotat (FR)

(57) **Abrégé**

La présente invention concerne un procédé de transmission de données dans lequel une donnée codée est affichée sous la forme de séquences d'images sur un écran (2) de terminal, une image (4) présentant un nombre prédéfini de surfaces de codages élémentaires (S1, S2, S3, S4, S5) dont la couleur varie en fonction de ladite donnée codée, de sorte qu'un dispositif portable (5) comportant des capteurs optiques associés (7a, 7b, 7c, 7d, 7e) dont le nombre est identique au nombre de surfaces de codage élémentaires (S1, S2, S3, S4, S5), soit apte à détecter lesdites séquences d'images affichées pour en déduire ladite donnée codée, caractérisé en ce qu'il comporte une étape d'initialisation dans laquelle on adapte la dimension des surfaces de codage élémentaires (S1, S2, S3, S4, S5) affichées sur ledit écran (2) en fonction des paramètres dudit écran (2) et de l'espacement (E) entre lesdits capteurs optiques (7a, 7b, 7c, 7d, 7e) dudit dispositif portable (5).

L'invention concerne également un dispositif de transmission de données mettant en oeuvre ledit procédé de transmission.

## Description

L'invention concerne un procédé et un dispositif de transmission de données dans lequel une donnée codée est affichée sous forme de séquences d'images sur un écran de terminal de sorte qu'un dispositif portable comportant des capteurs optiques associés puisse détecter lesdites séquences d'images affichées pour en déduire ladite donnée codée. Plus particulièrement, l'invention s'applique à un procédé et à un dispositif d'authentification permettant un accès sécurisé à des systèmes d'information ou toute autre application nécessitant une authentification.

Pour simplifier les interfaces utilisateurs, des données codées sont transmises à un terminal utilisateur sous la forme de séquences d'images. La séquence d'image est une représentation d'un code numérique ou alphanumérique, affichée sur un écran du terminal utilisateur, par exemple sous la forme d'une surface de codage dont la couleur varie séquentiellement en fonction de la donnée ainsi codée.

En complément, l'utilisateur dispose d'un dispositif portable comportant un capteur optique pour détecter ladite séquence d'image. L'utilisateur place le dispositif portable près de l'écran du terminal de sorte que le capteur optique puisse détecter la séquence de couleurs de la surface de codage affichée et en déduire les données codées.

Un tel procédé de transmission de données s'applique par exemple aux procédés d'authentification permettant un accès sécurisé à des systèmes d'information et pour lesquels on vérifie l'identité d'un utilisateur en lui demandant par exemple de saisir son identifiant (son nom) et un mot de passe personnel, au moment où il se connecte à un système d'information. L'identifiant et le mot de passe sont transmis au système d'information qui autorise ou non l'accès à l'utilisateur. Le procédé d'authentification garantit ainsi que les informations sont bien transmises à la personne visée.

Pour augmenter le débit de transmission de données, le dispositif portable comporte par exemple plusieurs capteurs optiques. Le terminal utilisateur affiche alors plusieurs surfaces de codage associées dont le nombre correspond au nombre de capteurs optiques du dispositif portable. Les capteurs optiques sont agencés dans le dispositif portable de manière que chaque zone sensible de chaque capteur soit face à une surface de codage associée.

Il existe cependant une large gamme de dimensions possibles pour les écrans des terminaux (15, 17, ... 24 pouces). De même, pour chaque taille d'écran, plusieurs résolutions peuvent être envisagées. Il en résulte que, selon les paramètres de l'écran utilisé, la dimension des images affichées varie. Certaines surfaces de codage peuvent alors ne pas correspondre à une zone sensible de capteur optique tandis que d'autres sont détectées en doublon par deux capteurs optiques successifs.

L'utilisateur doit alors réajuster manuellement les dimensions des surfaces de codage affichées en incrémentant pas à pas la taille de celles-ci et en faisant en sorte que chaque surface de codage se retrouve bien face à un capteur optique associé.

Cependant, cette opération de réglage supplémentaire peut s'avérer fastidieuse pour l'utilisateur.

Un but de l'invention est de pallier aux inconvénients mentionnés en proposant un procédé et un dispositif de transmission de données simplifiés pour l'utilisateur.

A cet effet, la présente invention a pour objet un procédé de transmission de données dans lequel une donnée codée est affichée sous la forme de séquences d'images sur un écran de terminal, une image présentant un nombre prédéfini de surfaces de codages élémentaires dont la couleur varie en fonction de ladite donnée codée, de sorte qu'un dispositif portable comportant des capteurs optiques associés dont le nombre est identique au nombre de surfaces de codage élémentaires, soit apte à détecter lesdites séquences d'images affichées pour en déduire ladite donnée codée, caractérisé en ce qu'il comporte une étape d'initialisation dans laquelle on adapte la dimension des surfaces de codage élémentaires affichées sur ledit écran en fonction des paramètres dudit écran et de l'espacement entre lesdits capteurs optiques dudit dispositif portable.

Selon un premier exemple, au cours de ladite étape d'initialisation, on affiche une succession d'images tests sur ledit écran de terminal, chaque image test présentant des surfaces de codage élémentaires dont les dimensions sont adaptées à des paramètres prédéfinis dudit écran, pour reconnaître parmi la succession d'images test, l'image test adaptée ayant des surfaces de codage élémentaires adaptées aux paramètres de l'écran du terminal utilisé.

Pour la reconnaissance de l'image test adaptée, on peut calculer un critère de cohérence pour chaque image test et on le compare à un critère de cohérence prédéterminé. Dans cet exemple de réalisation, l'étape d'initialisation est réalisée automatiquement à chaque nouvelle utilisation, de façon transparente pour l'utilisateur qui n'a pas besoin de réaliser de réglage particulier.

Pour la reconnaissance de l'image test adaptée, on peut aussi différencier l'image test adaptée en lui attribuant une valeur prédéterminée. Dans cet exemple de réalisation, l'étape d'initialisation est réalisée une fois pour toutes, ce qui permet une connexion plus rapide les fois suivantes.

Selon un deuxième exemple, au cours de ladite étape d'initialisation, on affiche une graduation sur ledit écran de terminal permettant de mesurer la largeur dudit dispositif portable en fonction des paramètres dudit écran de terminal utilisé. Dans ce mode de réalisation, l'étape d'initialisation est réalisée une fois pour toutes, ce qui permet une connexion plus rapide les fois suivantes. Ce mode de réalisation permet d'entrer facilement les paramètres de l'écran utilisé dans le serveur étant donné que ceux-ci ne sont pas forcément connus de l'utilisateur.

Selon un exemple d'application, ladite donnée codée est générée par un serveur de sécurité, ledit dispositif portable génère un mot de passe à usage unique à partir de ladite donnée codée et ledit serveur de sécurité teste ledit mot de passe à usage unique saisi par l'utilisateur en le comparant avec un mot de passe prédéfini.

L'invention a aussi pour objet un dispositif de transmission de données comportant :
- un terminal comportant un écran,
- un serveur apte à générer une donnée codée et à transmettre ladite donnée codée audit terminal sous la forme de séquences d'images pour afficher ladite séquence d'images sur ledit écran, une image présentant un nombre prédéfini de surfaces de codages élémentaires dont la couleur varie en fonction de ladite donnée codée,
- un dispositif portable comportant des capteurs optiques dont le nombre est identique au nombre de surfaces de codage élémentaires, ledit dispositif portable étant apte à détecter lesdites séquences d'images affichées pour en déduire ladite donnée codée,
caractérisé en ce que ledit dispositif de transmission de données comporte en outre un moyen d'adaptation pour adapter la dimension des surfaces de codage élémentaires affichées sur ledit écran en fonction des paramètres dudit écran et de l'espacement entre lesdits capteurs optiques dudit dispositif portable.

Selon une caractéristique dudit dispositif de transmission de données, ledit dispositif portable comporte des moyens générateurs de mot de passe à usage unique et ledit serveur comporte des moyens de sécurité pour comparer le mot de passe à usage unique saisi par l'utilisateur avec un mot de passe prédéfini.

L'invention a encore pour objet un procédé de transmission de données dans lequel une donnée codée est affichée sous forme de séquences d'images sur un écran de terminal, une image présentant un nombre prédéfini de surfaces de codage élémentaires dont la couleur varie en fonction de ladite donnée codée, de sorte qu'un dispositif portable comportant des capteurs optiques associés dont le nombre est identique au nombre de surfaces de codage élémentaires, soit apte à détecter lesdites séquences d'images affichées pour en déduire ladite donnée codée, caractérisé en ce qu'on affiche des images dont lesdites surfaces de codage élémentaires présentent des dimensions différentes.

Selon une ou plusieurs caractéristiques dudit procédé de transmission de données, prise seule ou en combinaison,
- les images présentent une symétrie par rapport à une surface de codage élémentaire centrale, les surfaces de codage élémentaires de part et d'autre de ladite surface de codage élémentaire centrale présentant des largeurs dont la valeur augmente avec l'éloignement de ladite surface de codage élémentaire centrale,
- chaque surface de codage élémentaire présente une largeur au moins supérieure ou égale à une zone sensible du capteur optique associé, et au moins inférieure ou égale à la distance entre les extrémités des zones sensibles des capteurs optiques de part et d'autre dudit capteur optique associé.

Avec de telles largeurs de surface de codage élémentaires, on évite d'avoir à ajuster les dimensions des surfaces de codage car on couvre un grand nombre de tailles et de résolutions d'écran.

Selon une réalisation, ladite donnée codée est générée par un serveur de sécurité, ledit dispositif portable génère un mot de passe à usage unique à partir de ladite donnée codée et ledit serveur de sécurité teste ledit mot de passe à usage unique saisi par l'utilisateur en le comparant avec un mot de passe prédéfini.

L'invention a également pour objet un dispositif de transmission de données comportant :
- un terminal comportant un écran,
- un serveur apte à générer une donnée codée et à transmettre ladite donnée codée audit terminal sous forme de séquences d'images pour afficher ladite séquence d'images sur ledit écran, une image présentant un nombre prédéfini de surfaces de codages élémentaires dont la couleur varie en fonction de ladite donnée codée,
- un dispositif portable comportant des capteurs optiques dont le nombre est identique au nombre de surfaces de codage élémentaires, ledit dispositif portable étant apte à détecter lesdites séquences d'images affichées pour en déduire ladite donnée codée,
caractérisé en ce que ledit dispositif de transmission de données comporte des moyens d'affichage configurés pour afficher des images dont lesdites surfaces de codage élémentaires présentent des dimensions différentes.

Ainsi, les dimensions des surfaces de codage affichées augmentent ou diminuent en fonction des paramètres de l'écran utilisé mais restent adaptées pour différents paramètres d'écran de sorte que chaque surface de codage élémentaire reste associée à un capteur optique du dispositif portable.

Selon une ou plusieurs caractéristiques dudit dispositif de transmission de données prise seule ou en combinaison,
- ledit dispositif portable comporte des capteurs optiques alignés et irrégulièrement espacés ; on est ainsi assuré d'afficher des surfaces de codage élémentaires de dimension compatibles avec la plupart des tailles et résolutions d'écrans utilisés actuellement,
- ledit dispositif portable comporte des moyens générateurs de mot de passe à usage unique et ledit serveur de sécurité comporte des moyens de sécurité pour tester le mot de passe à usage unique saisi par l'utilisateur en le comparant avec un mot de passe prédéfini.

D'autres caractéristiques et avantages de l'invention ressortiront de la description suivante, donnée à titre d'exemple, sans caractère limitatif, en regard des dessins annexés sur lesquels :
- la figure 1 représente une vue schématique d'un dispositif de transmission de données,
- la figure 2 représente un exemple d'image avec des zones sensibles de capteurs optiques associées,
- la figure 3a représente un écran et un dispositif portable, un premier exemple d'image test étant affiché sur ledit écran,
- la figure 3b représente une vue analogue à la figure 3a pour un deuxième exemple d'image test,
- la figure 3c représente une vue analogue à la figure 3a pour un troisième exemple d'image test,
- la figure 4a représente un écran et un dispositif portable, un exemple de graduation étant affiché sur ledit écran,
- la figure 4b représente une vue analogue à la figure 4a pour un deuxième exemple d'écran,
- la figure 5 représente un premier exemple d'image présentant des dimensions minimales compatibles avec des zones sensibles de capteurs optiques et un deuxième exemple d'image présentant des dimensions maximales compatibles avec lesdites zones sensibles, lesdits capteurs optiques étant régulièrement espacés, et
- la figure 6 représente une vue analogue à la figure 5 pour des capteurs optiques irrégulièrement espacés.

Sur ces figures, les éléments identiques portent les mêmes numéros de référence.

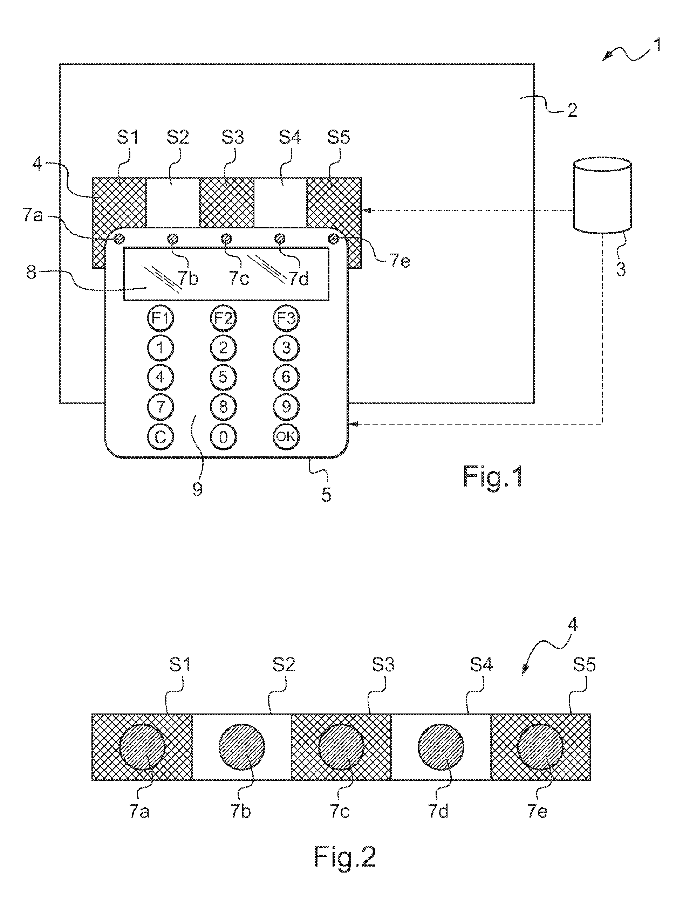

La figure 1 représente un dispositif de transmission de données 1. Le dispositif de transmission de données 1 comporte : un terminal pourvu d'un écran 2, un serveur 3 et un dispositif portable 5.

Le serveur 3 est apte à générer une donnée codée et à transmettre la donnée codée au terminal sous forme de séquences d'images 4 pour l'afficher sur l'écran 2.

Une image présente un nombre prédéfini de surfaces de codages élémentaires dont la couleur varie en fonction de la donnée codée. La couleur de ces surfaces de codage est par exemple noire ou blanche. Mieux visible sur la figure 2, une image 4 comporte par exemple cinq surfaces de codage élémentaires S1, S2, S3, S4, S5.

Dans cet exemple, les surfaces de codage élémentaires S1-S5 sont alignées, régulièrement réparties et présentent des dimensions sensiblement égales. La disposition alignée des surfaces de codage élémentaires S1-S5 facilite le positionnement du dispositif portable 5 face à l'écran 2.

Le dispositif portable 5 comporte des capteurs optiques, tel que des capteurs photosensibles. Le nombre de capteurs optiques du dispositif portable 5 est identique au nombre de surfaces de codage élémentaires S1-S5, le dispositif portable 5 étant apte à détecter les séquences d'images 4 affichées pour en déduire la donnée codée.

Chaque capteur optique présente une zone sensible de détection pour laquelle il peut détecter la couleur de la surface de codage associée. Les zones sensibles des capteurs optiques 7a, 7b, 7c, 7d, 7e sont représentées sur la figure 2 et sur le dispositif portable 5 de la figure 1.

Le dispositif portable 5 peut également comporter un écran 8 et/ou un clavier 9.

Le dispositif de transmission de données 1 comporte en outre un moyen d'adaptation pour adapter la dimension des surfaces de codage élémentaires S1-S5 affichées sur l'écran 2 en fonction des paramètres de celui-ci et de l'espacement entre les capteurs optiques du dispositif portable, la dimension (diagonale) et la résolution définissant les paramètres de l'écran.

En fonctionnement, le moyen d'adaptation adapte la dimension des surfaces de codage élémentaires S1-S5 en fonction de l'écran 2 et du dispositif portable 5 dans une étape d'initialisation, de sorte que les surfaces de codage élémentaires S1-S5 soient correctement affichées sur l'écran 2. L'utilisateur positionne ensuite le dispositif portable 5 à proximité de l'écran 2 du terminal, par exemple en contact avec celui-ci, pour que chaque capteur optique soit positionné face à une surface de codage élémentaire associée. Les capteurs optiques détectent alors les variations de couleur des surfaces de codage élémentaires pour en déduire une donnée codée.

Selon un premier mode de réalisation de l'étape d'initialisation, on affiche une succession d'images tests sur l'écran 2 de terminal.

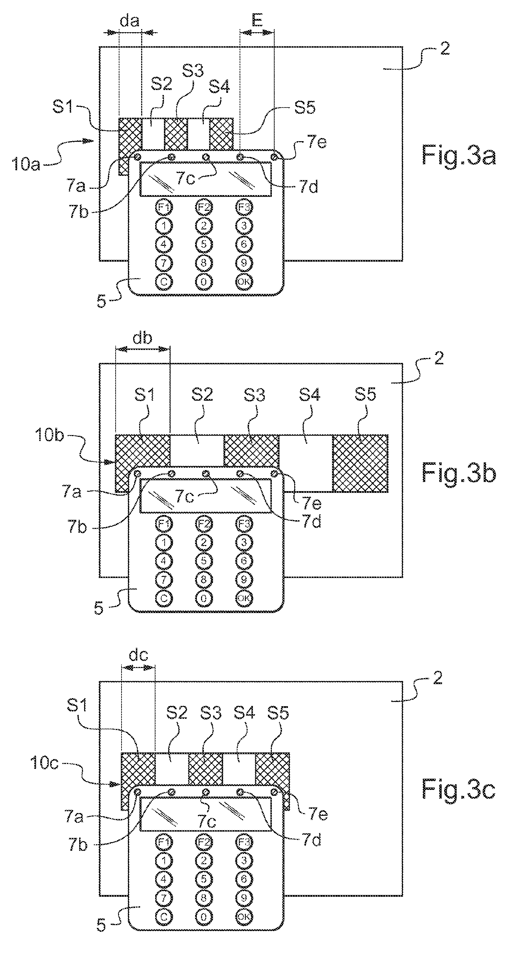

On a représenté un exemple de succession d'images test 10a, 10b, 10c sur l'écran 2 en figures 3a, 3b et 3c.

Chaque image test 10a, 10b, 10c présente des surfaces de codage élémentaires S1-S5 dont les dimensions da, db, de sont adaptées à des paramètres prédéfinis d'écran, pour reconnaître parmi la succession d'images test, l'image test adaptée ayant des surfaces de codage élémentaires S1-S5 adaptées aux paramètres de l'écran 2 du terminal utilisé.

Selon un premier exemple de réalisation de la reconnaissance de l'image test adaptée, le dispositif portable 5 est configuré pour calculer un critère de cohérence pour chaque image test et pour le comparer à un critère de cohérence prédéterminé.

Le critère de cohérence est par exemple calculé à partir d'informations contenues dans l'image. On prévoit par exemple des mots de contrôle en début et en fin de la séquence d'image de la donnée codée. Ces mots de contrôle permettent de détecter si le message complet n'est pas cohérent.

Ainsi, on distingue sur la figure 3a, un premier exemple d'image test 10a pour laquelle on remarque notamment que les zones sensibles des deux derniers capteurs 7d et 7e ne perçoivent aucune surface de codage élémentaire. En effet, dans ce premier exemple, l'écran 2 présente des paramètres inadaptés au dispositif portable 5 positionné face à lui. En particulier, l'écran 2 présente une dimension trop petite et/ou une résolution trop grande faisant que l'image test affichée 10a ne convient pas à l'espacement E entre les capteurs optiques du dispositif portable 5. Les derniers capteurs optiques 7d et 7e vont systématiquement transmettre la même information ou pas d'information du tout. La comparaison du critère de cohérence calculé avec le critère de cohérence prédéterminé va permettre de détecter cette incohérence et ainsi déterminer que l'image test 10a n'est pas adaptée aux paramètres de l'écran 2 utilisé.

On affiche alors une autre image test présentant des dimensions de surfaces élémentaires différentes de l'image test 10a affichée précédemment dont on a détecté la non-cohérence.

La figure 3b représente un exemple d'une deuxième image test 10b dont les surfaces de codage élémentaires S1-S5 présentent des dimensions db supérieures aux dimensions des surfaces de codage élémentaires S1-S5 de la première image test 10a.

On remarque notamment que la zone sensible de détection du deuxième capteur optique 7b tombe entre deux surfaces de codage élémentaires successives S1, S2, que les zones sensibles des deux derniers capteurs optiques 7d, 7e tombent face à une même surface de codage élémentaire S3, et que les deux dernières surfaces de codages élémentaires S5 et S6 ne sont face à aucun capteur optique.

Dans ce second exemple, l'écran 2 présente également des paramètres inadaptés pour le dispositif portable 5 positionné face à lui. En particulier, l'écran 2 présente une dimension trop grande et/ou une résolution trop petite pour l'image test 10b affichée faisant que les derniers capteurs optiques 7d et 7e transmettent systématiquement la même information et que les séquences des deux dernières surfaces de codage élémentaires S5, S6 ne sont pas détectées. La comparaison du critère de cohérence calculé avec le critère de cohérence prédéterminé va permettre de détecter cette incohérence et ainsi déterminer que l'image test 10b n'est pas adaptée aux paramètres de l'écran 2 utilisé.

On affiche alors une autre image test 10c présentant des dimensions de surfaces élémentaires différentes des images tests 10a, 10b affichées précédemment (figure 3c). Dans cet exemple, la comparaison du critère de cohérence au critère de cohérence prédéterminé permet de déterminer que l'image test 10c présente des dimensions de de surfaces de codage élémentaires S1-S5 adaptées aux paramètres de l'écran 2 utilisé, la dimension de des surfaces de codage élémentaires étant du même ordre de grandeur que l'espacement E entre les capteurs optiques du dispositif portable 5.

Dans cet exemple de réalisation, l'étape d'initialisation est réalisée automatiquement à chaque nouvelle utilisation de façon transparente pour l'utilisateur qui n'a pas besoin de réaliser de réglage particulier.

Selon un deuxième exemple de réalisation de la reconnaissance de l'image test adaptée, on différencie l'image test adaptée en lui attribuant une valeur prédéterminée. Dans cet exemple de réalisation, l'utilisateur doit entrer la valeur attribuée sur le clavier 9 du dispositif portable 5 ou sur le terminal.

Ainsi, on affiche une succession d'images tests sur l'écran 2 de terminal, chaque image test présentant des surfaces de codage élémentaires dont les dimensions sont adaptées à des paramètres prédéfinis d'écran. Lorsque l'image test affichée présente des surfaces élémentaires de dimensions adaptées à l'écran utilisé, l'utilisateur identifie l'image test en entrant manuellement une valeur prédéterminée, reconnue pour être caractéristique de l'image test adaptée (non représenté). Dans cet exemple de réalisation, l'étape d'initialisation est réalisée une fois pour toutes, ce qui permet une connexion plus rapide les fois suivantes.

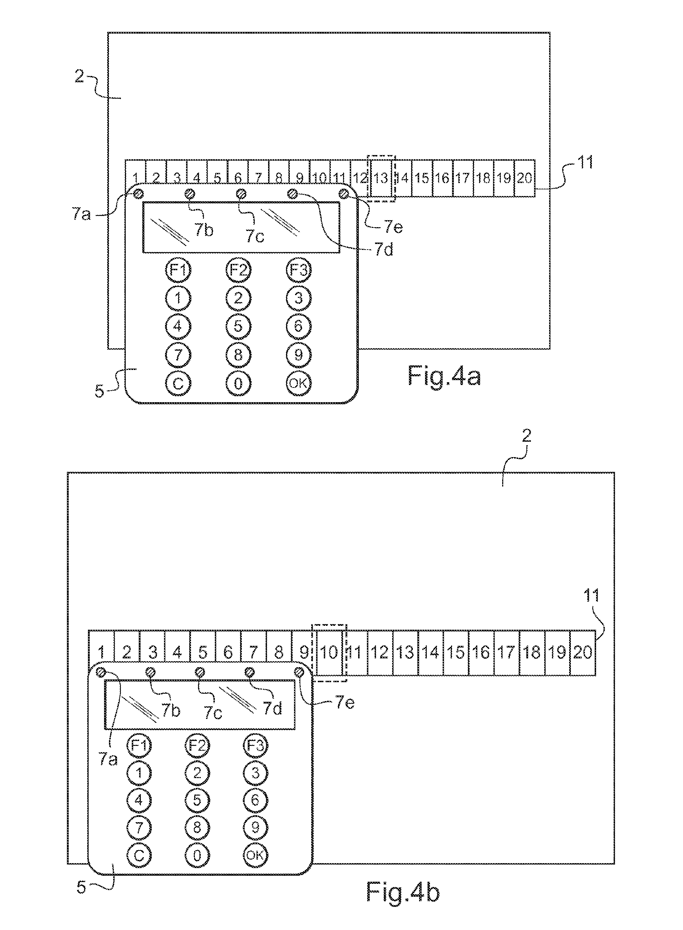

Selon un deuxième mode de réalisation de l'étape d'initialisation représenté en figure 4a et 4b, on affiche une graduation 11 sur l'écran 2 pour mesurer la largeur du dispositif portable 5 en fonction des paramètres de l'écran 2 de terminal utilisé.

Par exemple, l'utilisateur positionne le dispositif portable 5 prés de l'écran 2, le bord gauche du dispositif portable 5 étant aligné avec le bord gauche de la graduation correspondant à son origine. Il suffit alors à l'utilisateur d'entrer la première valeur de la graduation qui n'est pas recouverte par le dispositif portable 5.

Sur le premier exemple représenté en figure 4a, l'utilisateur entre la valeur 13, ce qui correspond à un écran 15 pouces.

Sur le deuxième exemple représenté en figure 4b, l'utilisateur entre la valeur 10 correspondant à un écran 22 pouces.

Le serveur sauvegarde cette information et l'utilise pour calculer les dimensions correctes des surfaces de codage élémentaires S1-S5 à afficher.

Dans ce mode de réalisation, l'étape d'initialisation est réalisée une fois pour toutes, ce qui permet une connexion plus rapide les fois suivantes. Ce mode de réalisation permet d'entrer facilement les paramètres de l'écran utilisé dans le serveur étant donné que ceux-ci ne sont pas forcément connus de l'utilisateur.

Alternativement ou en complément du moyen d'adaptation, le dispositif de transmission de données comporte des moyens d'affichage configurés pour afficher des images dont les surfaces de codage élémentaires S1-S5 présentent des dimensions différentes.

Ainsi, les dimensions des surfaces de codage affichées S1-S5 augmentent ou diminuent en fonction des paramètres de l'écran utilisé mais restent adaptées pour différents paramètres d'écran de sorte que chaque surface de codage élémentaire reste associée à un capteur optique du dispositif portable.

Par exemple, les images présentent une symétrie par rapport à une surface de codage élémentaire centrale et les surfaces de codage élémentaires de part et d'autre de la surface de codage élémentaire centrale présentent des largeurs dont la valeur augmente avec l'éloignement de la surface de codage élémentaire centrale (non représenté). On affiche alors une image déformée par rapport aux images précédemment décrites, comme si elle avait été étirée au niveau de ses extrémités.

On affiche par exemple des images pour lesquelles chaque surface de codage élémentaire S1-S5 présente une largeur :
- au moins supérieure à une zone sensible du capteur optique associé, et
- au moins inférieure à la distance entre les extrémités des zones sensibles des capteurs optiques de part et d'autre du capteur optique associé.

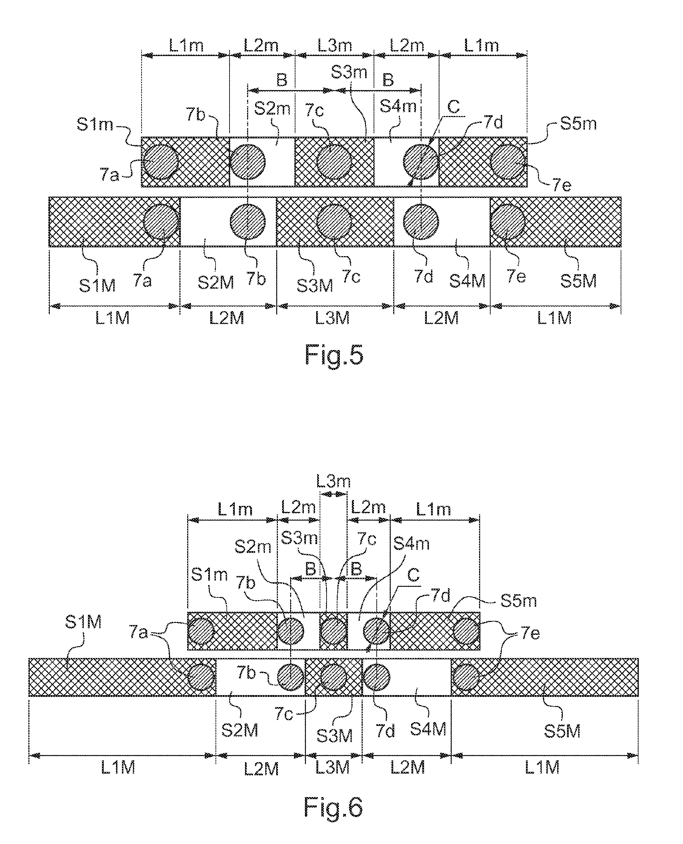

La figure 5 illustre un exemple d'images présentant des surfaces de codage de dimensions différentes pour deux dimensions extrémales admissibles d'écran.

Dans cet exemple, le dispositif portable 5 comporte cinq capteurs optiques alignés 7a-7e et régulièrement espacés. Les surfaces de codage élémentaires S1-S5 alignées présentent des dimensions symétriquement identiques par rapport à la surface de codage centrale S3.

La dimension B correspond à l'espacement entre deux centres de zones sensibles de deux capteurs optiques successifs. La dimension C correspond au rayon de capture de la zone sensible d'un capteur optique.

On définit la largeur minimale L3m de la surface de codage élémentaire centrale de dimension minimale S3m comme au moins supérieure ou égale à 2*C, ce qui correspond à la dimension d'une zone sensible de capteur optique.

On définit la largeur maximale L3M de la surface de codage élémentaire centrale de dimension maximale S3M comme au moins inférieure ou égale à 2*(B²-C²)/(2*B-C), ce qui correspond à la distance entre les extrémités des zones sensibles des capteurs optiques 7b, 7d de part et d'autre du capteur optique central 7c.

La largeur des surfaces de codage élémentaires S2, S4 adjacentes à la surface de codage élémentaire centrale S3 sont au moins supérieure ou égales à B+C-L3/2, ce qui correspond à la distance entre l'extrémité de la surface de codage élémentaire centrale S3 et l'extrémité gauche sur la figure de la zone sensible du capteur optique 7b, 7d correspondant à la surface de codage élémentaire S2, S4.

La largeur des surfaces de codage des extrémités S1, S5 est au moins supérieure ou égale à B, c'est-à-dire à la distance entre la surface de codage élémentaire S2, S4 adjacente à la surface centrale S3 et l'extrémité gauche de la zone sensible du capteur optique correspondant 7a, 7e.

Avec de telles largeurs de surface de codage élémentaires, on évite d'avoir à ajuster les dimensions des surfaces de codage car on couvre un plus grand nombre de tailles et de résolutions d'écran.

On peut alors aussi prévoir que le dispositif portable 5 comporte des capteurs optiques 7a-7e alignés et irrégulièrement espacés. On augmente ainsi encore la possibilité de paramètres compatibles avec une même taille d'image, comme représenté en figure 6.

Pour cela, on prévoit par exemple une disposition symétrique des capteurs optiques par rapport à une surface centrale S3, les capteurs optiques des positions extrémales 7a, 7e étant plus éloignés des trois capteurs optiques 7b, 7c, 7d situés au centre.

La largeur minimale L3m de la surface de codage élémentaire centrale S3 est au moins supérieure ou égale à 2*C, ce qui correspond à la dimension d'une zone sensible de capteur optique. Les largeurs minimales L1m, L2m, L4m et L5m des autres surfaces de codage élémentaires sont au moins supérieures ou égales à B.

Ainsi, en fonctionnement, les moyens d'affichage affichent des images dont les surfaces de codage élémentaires S1-S5 présentent des dimensions différentes. On est ainsi assuré d'afficher des surfaces de codage élémentaires de dimensions compatibles avec la plupart des tailles et résolutions d'écrans utilisés actuellement.

Selon une application, le procédé de transmission de donnée s'applique à un procédé d'authentification permettant un accès sécurisé à des systèmes d'information, par exemple mettant en oeuvre un protocole d'échange de type OTP (" One-Time Password " selon la terminologie anglo-saxonne généralement employée) entre le serveur et l'utilisateur.

Le dispositif portable 5 comporte des moyens générateurs de mot de passe à usage unique à partir du code d'accès pour générer un mot de passe à usage unique à partir de la donnée codée. Le code d'accès dépend de l'identifiant et de la chronologie de la connexion. Le mot de passé généré par le dispositif portable 5 est par exemple affiché sur l'écran 8. L'utilisateur saisi le mot de passe ainsi généré sur le terminal utilisateur qui le transmet au serveur 3.

Le serveur de sécurité 3 comporte des moyens de sécurité pour comparer le mot de passe à usage unique saisi par l'utilisateur avec un mot de passe prédéfini ou qu'il a lui-même calculé. En fonction de cette comparaison, il autorise ou non l'accès de l'utilisateur au système d'information.

Le procédé et le dispositif de transmission de données permettent ainsi d'adapter l'affichage de données codées à des écrans de différentes tailles et résolutions tout en restant d'interface simple pour l'utilisateur.

## Revendications

1. Procédé de transmission de données dans lequel une donnée codée est affichée sous la forme de séquences d'images sur un écran de terminal, une image présentant un nombre prédéfini de surfaces de codages élémentaires dont la couleur varie en fonction de ladite donnée codée, de sorte qu'un dispositif portable comportant des capteurs optiques associés dont le nombre est identique au nombre de surfaces de codage élémentaires, soit apte à détecter lesdites séquences d'images affichées pour en déduire ladite donnée codée, **caractérisé en ce qu'**il comporte une étape d'initialisation dans laquelle on adapte la dimension des surfaces de codage élémentaires affichées sur ledit écran en fonction des paramètres dudit écran et de l'espacement entre lesdits capteurs optiques dudit dispositif portable.

2. Procédé de transmission de données selon la revendication 1, **caractérisé en ce qu'**au cours de ladite étape d'initialisation, on affiche une succession d'images tests sur ledit écran de terminal, chaque image test présentant des surfaces de codage élémentaires dont les dimensions sont adaptées à des paramètres prédéfinis dudit écran, pour reconnaître parmi la succession d'images test, l'image test adaptée ayant des surfaces de codage élémentaires adaptées aux paramètres de l'écran du terminal utilisé.

3. Procédé de transmission de données selon la revendication 2, **caractérisé en ce que** pour la reconnaissance de l'image test adaptée, on calcule un critère de cohérence pour chaque image test et on le compare à un critère de cohérence prédéterminé.

4. Procédé de transmission de données selon la revendication 2, **caractérisé en ce que** pour la reconnaissance de l'image test adaptée, on différencie l'image test adaptée en lui attribuant une valeur prédéterminée.

5. Procédé de transmission de données selon la revendication 1, **caractérisé en ce qu'**au cours de ladite étape d'initialisation, on affiche une graduation sur ledit écran de terminal permettant de mesurer la largeur dudit dispositif portable en fonction des paramètres dudit écran de terminal utilisé.

6. Procédé de transmission de données selon l'une des revendications 1 à 5, **caractérisé en ce que** ladite donnée codée est générée par un serveur de sécurité, **en ce que** ledit dispositif portable génère un mot de passe à usage unique à partir de ladite donnée codée et **en ce que** ledit serveur de sécurité teste ledit mot de passe à usage unique saisi par l'utilisateur en le comparant avec un mot de passe prédéfini.

7. Dispositif de transmission de données comportant :
- un terminal comportant un écran (2),
- un serveur (3) apte à générer une donnée codée et à transmettre ladite donnée codée audit terminal sous la forme de séquences d'images pour afficher ladite séquence d'images sur ledit écran (2), une image (4) présentant un nombre prédéfini de surfaces de codages élémentaires (S1, S2, S3, S4, S5) dont la couleur varie en fonction de ladite donnée codée,
- un dispositif portable (5) comportant des capteurs optiques (7a, 7b, 7c, 7d, 7e) dont le nombre est identique au nombre de surfaces de codage élémentaires (S1, S2, S3, S4, S5), ledit dispositif portable (5) étant apte à détecter lesdites séquences d'images affichées pour en déduire ladite donnée codée,
**caractérisé en ce que** ledit dispositif de transmission de données comporte en outre un moyen d'adaptation pour adapter la dimension des surfaces de codage élémentaires (S1, S2, S3, S4, S5), affichées sur ledit écran (2) en fonction des paramètres dudit écran (2) et de l'espacement (E) entre lesdits capteurs optiques (7a, 7b, 7c, 7d, 7e) dudit dispositif portable (5).

8. Dispositif de transmission de données selon la revendication 7, **caractérisé en ce que** ledit dispositif portable (5) comporte des moyens générateurs de mot de passe à usage unique et **en ce que** ledit serveur comporte des moyens de sécurité pour comparer le mot de passe à usage unique saisi par l'utilisateur avec un mot de passe prédéfini.

9. Procédé de transmission de données dans lequel une donnée codée est affichée sous forme de séquences d'images sur un écran de terminal, une image présentant un nombre prédéfini de surfaces de codage élémentaires dont la couleur varie en fonction de ladite donnée codée, de sorte qu'un dispositif portable comportant des capteurs optiques associés dont le nombre est identique au nombre de surfaces de codage élémentaires, soit apte à détecter lesdites séquences d'images affichées pour en déduire ladite donnée codée, **caractérisé en ce qu'**on affiche des images dont lesdites surfaces de codage élémentaires présentent des dimensions différentes.

10. Procédé de transmission de données selon la revendication 9, **caractérisé en ce que** lesdites images présentent une symétrie par rapport à une surface de codage élémentaire centrale, les surfaces de codage élémentaires de part et d'autre de ladite surface de codage élémentaire centrale présentant des largeurs dont la valeur augmente avec l'éloignement de ladite surface de codage élémentaire centrale.

11. Procédé de transmission de données selon l'une des revendications 9 ou 10, **caractérisé en ce que** chaque surface de codage élémentaire présente une largeur :
- au moins supérieure ou égale à une zone sensible du capteur optique associé, et
- au moins inférieure ou égale à la distance entre les extrémités des zones sensibles des capteurs optiques de part et d'autre dudit capteur optique associé.

12. Procédé de transmission de données selon l'une des revendications 9 à 11, **caractérisé en ce que** ladite donnée codée est générée par un serveur de sécurité, **en ce que** ledit dispositif portable génère un mot de passe à usage unique à partir de ladite donnée codée et **en ce que** ledit serveur de sécurité teste ledit mot de passe à usage unique saisi par l'utilisateur en le comparant avec un mot de passe prédéfini.

13. Dispositif de transmission de données comportant :
- un terminal comportant un écran (2),
- un serveur (3) apte à générer une donnée codée et à transmettre ladite donnée codée audit terminal sous forme de séquences d'images pour afficher ladite séquence d'images sur ledit écran (2), une image (4) présentant un nombre prédéfini de surfaces de codages élémentaires (S1, S2, S3, S4, S5) dont la couleur varie en fonction de ladite donnée codée,
- un dispositif portable (5) comportant des capteurs optiques (7a, 7b, 7c, 7d, 7e) dont le nombre est identique au nombre de surfaces de codage élémentaires (S1, S2, S3, S4, S5), ledit dispositif portable (5) étant apte à détecter lesdites séquences d'images (S1, S2, S3, S4, S5) affichées pour en déduire ladite donnée codée,
**caractérisé en ce que** ledit dispositif de transmission de données comporte des moyens d'affichage configurés pour afficher des images dont lesdites surfaces de codage élémentaires présentent des dimensions différentes.

14. Dispositif de transmission de données selon la revendication 13, **caractérisé en ce que** ledit dispositif portable (5) comporte des capteurs optiques (7a, 7b, 7c, 7d, 7e) alignés et irrégulièrement espacés.

15. Dispositif de transmission de données selon l'une des revendications 13 ou 14, **caractérisé en ce que** ledit dispositif portable (5) comporte des moyens générateurs de mot de passe à usage unique et **en ce que** ledit serveur de sécurité comporte des moyens de sécurité pour tester le mot de passe à usage unique saisi par l'utilisateur en le comparant avec un mot de passe prédéfini.
